# EUROPEAN PATENT SPECIFICATION

(11) **EP 3 640 448 B1**
(45) Date of publication and mention of the grant of the patent: **07.07.2021**
(21) Application number: 19201642.6
(22) Date of filing: 07.10.2019
(51) Int. Cl.: F02B 67/06, F16H 55/36

(54) **SELF-ALIGNING BELT PULLEY**
SELBSTAUSRICHTENDE RIEMENSCHEIBE
POULIE À COURROIE À AUTO-ALIGNEMENT

(30) Priority: 15.10.2018 GB 201816768
(43) Date of publication of application: 22.04.2020
(73) Proprietor: AGCO International GmbH, 8212 Neuhausen am Rheinfall (CH)
(72) Inventor: BRIAND, David, 60026 Beauvais (FR)
(74) Representative: AGCO Intellectual Property Department

(56) References cited:
- CN-A- 105 936 136
- US-A1- 2004 077 445
- US-A1- 2017 082 177

## Description

### FIELD OF THE INVENTION

The present invention relates to belt pulleys. In particular, the present invention relates to belt pulleys for use in vehicles such as on engine applications such as front end auxiliary drive systems.

### TECHNICAL BACKGROUND

Belt drive systems are well known and used in many applications. In particular, belt drive systems may be used for front end auxiliary drive systems on internal combustion engines.

A major factor in the lifetime of such belt drive systems is alignment of the belt and the planes of rotation of the belt pulleys. The planes of rotation of the pulleys may become offset due to manufacturing tolerances and or low quality casting or machining processes.

Belts running on these systems are misaligned. This misalignment causes increased wear and fatigue of the system in particular belts and pulley bearing which can cause early failure of belts or pulleys. Tightening tolerances to minimise offset in rotational planes is expensive and time consuming.

US patent application publication number 2004077445 A1 describes a self-aligning pulley assembly which allows for limited pivotal adjustment of the rotational axis of a pulley wheel. The pulley wheel is mounted to a fastener by an arrangement which allows a limited universal pivoting of the rotational axis of the pulley as a result of belt tension forces to align the pulley when the fastener is loose. After the pulley is aligned, the fastener is tightened to fix the rotational axis of the pulley. The arrangement disclosed is complex, having a large number of parts, and the fastener must be loosened to allow self-alignment and tightened afterwards.

The present invention aims to solve some of the above mentioned problems.

### SUMMARY OF THE INVENTION

Accordingly, there is provided a self-aligning belt pulley for a belt drive system, the self-aligning pulley comprising: a wheel; a bolt; and a collar; characterized in that the self-aligning pulley further comprises a anti-rotation means, wherein the bolt is received through the centre of the collar and the collar is freely rotatable on the bolt, and the wheel is supported by the collar and rotationally fixed to the collar by the anti-rotation means and wherein the wheel is slideable relative to the collar.

Advantageously, the wheel can slide relative the collar to accommodate misalignments in belt drive systems.

The anti-rotation means may comprise a key and keyway. Advantageously key and keyway anti rotation devices are cheap to manufacture and have no moving parts which improve system reliability. The key may be received in a keyway of the wheel and a keyway of the collar. The self-aligning belt pulley may comprise a nut for retaining the collar, key and wheel on the bolt.

The anti-rotation means may comprise a number of interlocking splines. Advantageously, the interlocking splines provide more than one contact point to prevent relative rotation of the collar and wheel.

The collar may be a bearing. Advantageously, a bearing allows the collar to rotate smoothly relative the bolt.

The collar may be a plain bearing. Advantageously, a plain bearing has no moving parts and is therefore resistant to failure thereby increasing system robustness.

The collar may comprise a spindle roller bearing. Advantageously, a spindle roller bearing allows the collar to rotate relative the bolt with reduced frictional losses.

### DETAILED DESCRIPTION OF THE INVENTION

Embodiments of the invention will now be described, by way of example only, with reference to the accompanying drawings, in which:
Fig. 1 is a perspective view of the pulley according to the present invention;
Fig. 2 is a cross section of a pulley in a first position;
Fig. 3 is a cross section of the pulley of Fig. 2 in a second position;
Fig. 4 is a schematic of a belt drive including the pulley of Fig. 2 in the first position;
Fig. 5 is a schematic of a belt drive including the pulley of Fig. 2 in the second position.

The drawings are provided by way of reference only, and will be acknowledged as not to scale.

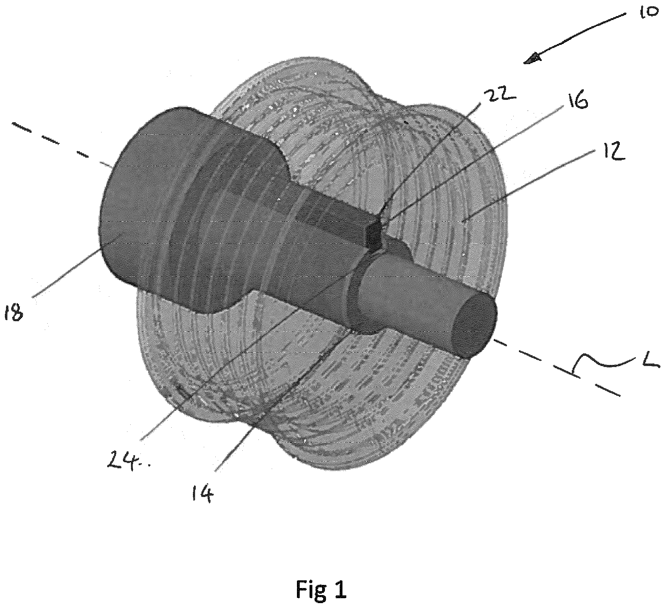

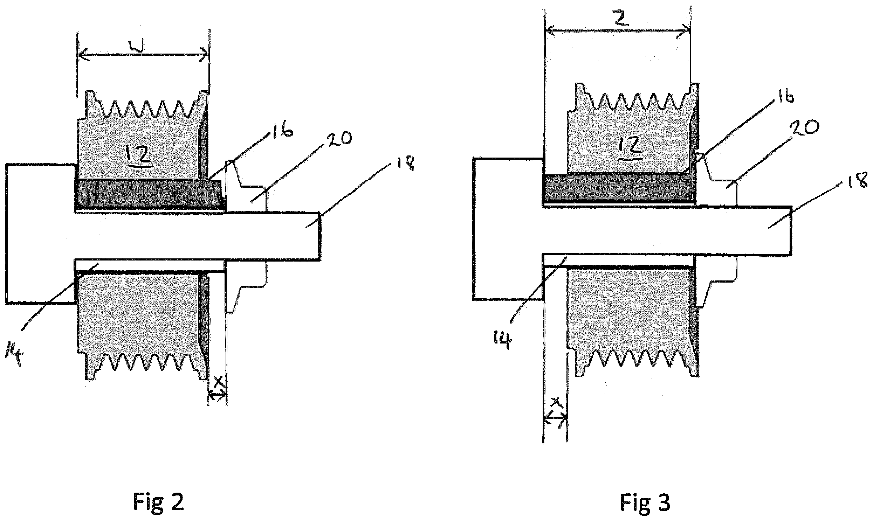

With reference to Fig. 1, there is shown a self-aligning belt pulley 10. The belt pulley is configured to automatically self-align should it be used in a drive system where there is an offset between the planes of the pulleys. The self-aligning pulley 10 comprises a wheel 12, a collar 14, an anti-rotation means (key) 16, a bolt 18 and a nut 20 (see figures 2 and 3).

The wheel 12 in this specific embodiment is a grooved pulley for use with a multi-v belt for instance, the serpentine or fan belt of an internal combustion engine. The wheel 12 has grooves on its outer circumference for engagement with a multi-v belt. In other embodiments the pulley may have a smooth outer surface, for example for use as a back side belt pulley in a belt drive system or any other style of pulley. The wheel 12 further comprises a keyway 22 for receiving the key 16.

The collar 14 comprises a keyway 24 for receiving the key 16. The collar 14 supports the wheel 12 relative to the bolt 18 and permits rotational movement of the wheel 12 relative to the bolt 18. The collar 14 may be a plain bearing or in alternative embodiment any mean that permits rotation about the bolt 18 for example a needle roller bearing.

The key 16 in this embodiment is a key 16 is received in the keyway 22 of the wheel 12 and the keyway 24 of the collar 14. The key 16 prevents relative rotational movement of the collar 14 and the wheel 12. Translational movement of the wheel 12 relative to the collar 14 along the axis L is unrestricted. That is, the wheel 12 can slide relative to the key 16 and collar 14. In other embodiments, other means for preventing rotational movement of the wheel 12 relative to the collar 14 whilst permitting sliding motion may be used for example a series of interlocking splines.

The width W of the wheel 12 is smaller than the length Z of the collar 14. This difference in dimensions between the width W and length Z permits the wheel 12 to slide relative to the collar 14 by a distance of X. It will be understood that in other embodiments, these dimensions will be modified to suit the particular application of the invention.

The bolt 18 is a high tensile steel bolt, however may be any suitable fastener for the particular application. The bolt 18 is received through the centre of the collar 14. The collar 14 being freely rotatable about the shank of the bolt 18.

The nut 20 (see figures 2 and 3) is a flange head nut. In other embodiments any suitable retainer may be used, indeed, the nut may be replaced by a press fit steel washer or a retaining pin through the hank of the bolt 18. In some embodiments the nut 20 may not be required. For example when the bolt 20 is attaching the wheel 12 to a protruding boss on an engine block. The nut 20 in the embodiments shown in figures 2 and 3 retain the collar 14, key 16 and wheel 12 on the bolt 18.

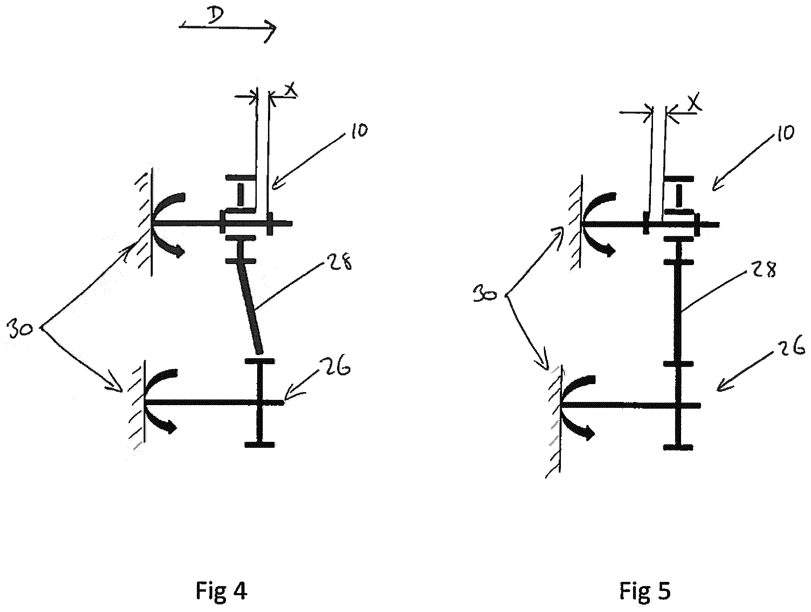

Referring now to figures 4 and 5, there is shown a schematic belt drive system. The belt drive system comprises a self-aligning belt pulley 10, a standard known belt pulley 26 and a belt 28. The pulleys 10, 26 are fixed relative one another to a surface 30 for example the front face of an engine block. As is shown in figure 4, the planes of rotation of the pulleys 10, 26 are offset from one another, leading to a misalignment of the belt 28.

The misalignment of the pulleys may be caused by dimensional tolerance differences in machining of the surface 30 and or of the pulleys themselves. The wheel 12 of self-aligning pulley 10 moves by a distance of X in the direction D to the position shown in figure 5 thereby aligning the planes of the pulleys 10, 26 and aligning the belt 28.

## Claims

1. A self-aligning belt pulley (10) for a belt drive system, the self-aligning pulley comprising:
a wheel (12);
a bolt (18); and
a collar (14);
**characterized in that** the self-aligning pulley further comprises a anti-rotation means (16), wherein the bolt is received through the centre of the collar and the collar is freely rotatable on the bolt, and the wheel is supported by the collar and rotationally fixed to the collar by the anti-rotation means and wherein the wheel is slideable relative to the collar.

2. A self-aligning belt pulley (10) according to claim 1 wherein the anti-rotation means comprises a key (16) and keyway (22, 24).

3. A self-aligning belt pulley (10) according to claim 2 wherein the key (16) is received in a keyway (22) of the wheel and a keyway (24) of the collar.

4. A self-aligning belt pulley (10) according to claim 2 or claim 3 comprising a nut (20) for retaining the collar, key and wheel on the bolt (18).

5. A self-aligning belt pulley (10) according to claim 1 wherein the anti-rotation means comprises a number of interlocking splines.

6. A self-aligning belt pulley (10) according to claim 1 wherein the collar (14) comprises a bearing.

7. A self-aligning belt pulley (10) according to claim 6 wherein the collar (14) comprises a plain bearing.

8. A self-aligning belt pulley (10) according to claim 6 wherein the collar (14) comprises a spindle roller bearing.

## Patentansprüche

1. Selbstausrichtende Riemenscheibe (10) für ein Riemenantriebssystem, wobei die selbstausrichtende Riemenscheibe das Folgende aufweist:
ein Rad (12);
eine Schraube (18); und
einen Bund (14);
**dadurch gekennzeichnet, dass** die selbstausrichtende Riemenscheibe weiterhin ein Anti-Rotationsmittel (16) aufweist, wobei sich die Schraube durch die Mitte des Bunds erstreckt und der Bund frei auf der Schraube drehbar ist, und das Rad durch den Bund gelagert und durch das Anti-Rotationsmittel drehfest mit dem Bund verbunden ist, und wobei das Rad relativ zu dem Bund verschiebbar ist.

2. Selbstausrichtende Riemenscheibe (10) nach Anspruch 1, wobei das Anti-Rotationsmittel eine Passfeder (16) und eine Passnut (22, 24) aufweist.

3. Selbstausrichtende Riemenscheibe (10) nach Anspruch 2, wobei die Passfeder (16) in einer Passnut (2) des Rads und einer Passnut (24) des Bunds aufgenommen ist.

4. Selbstausrichtende Riemenscheibe (10) nach Anspruch 2 oder 3, mit einer Mutter (20) zum Festhalten des Bunds, der Passfeder und des Rads an der Schraube (18).

5. Selbstausrichtende Riemenscheibe (10) nach Anspruch 1, wobei das Anti-Rotationsmittel eine Kerbverzahnung aufweist.

6. Selbstausrichtende Riemenscheibe (10) nach Anspruch 1, wobei der Bund (14) ein Lager aufweist.

7. Selbstausrichtende Riemenscheibe (10) nach Anspruch 6, wobei der Bund (14) ein Gleitlager aufweist.

8. Selbstausrichtende Riemenscheibe (10) nach Anspruch 6, wobei der Bund (14) ein Spindellager aufweist.

## Revendications

1. Poulie pour courroie à auto-alignement (10) destinée à un dispositif de commande par courroie, la poulie à auto-alignement comprenant :
une roue (12) ;
une vis (18) ; et
un collier (14) ;
**caractérisée en ce que** la poulie à auto-alignement comprend, en outre, un moyen de blocage en rotation (16), dans laquelle la vis est reçue à travers le centre du collier et le collier peut tourner librement sur la vis, et la roue est supportée par le collier et bloquée en rotation sur le collier par le moyen de blocage en rotation et dans laquelle la roue peut coulisser par rapport au collier.

2. Poulie pour courroie à auto-alignement (10) selon la revendication 1, dans laquelle le moyen de blocage en rotation comprend une clavette (16) et une rainure de clavette (22, 24).

3. Poulie pour courroie à auto-alignement (10) selon la revendication 2, dans laquelle la clavette (16) est reçue dans une rainure de clavette (22) de la roue et une rainure de clavette (24) du collier.

4. Poulie pour courroie à auto-alignement (10) selon la revendication 2 ou 3, comprenant un écrou (20) afin de retenir le collier, la clavette et la roue sur la vis (18).

5. Poulie pour courroie à auto-alignement (10) selon la revendication 1, dans laquelle le moyen de blocage en rotation comprend un certain nombre de cannelures imbriquées.

6. Poulie pour courroie à auto-alignement (10) selon la revendication 1, dans laquelle le collier (14) comprend un palier.

7. Poulie pour courroie à auto-alignement (10) selon la revendication 6, dans laquelle le collier (14) comprend un palier lisse.

8. Poulie pour courroie à auto-alignement (10) selon la revendication 6, dans laquelle le collier (14) comprend un roulement à aiguilles.
